# EUROPEAN PATENT SPECIFICATION

(11) **EP 2 755 066 B1**
(45) Date of publication and mention of the grant of the patent: **19.08.2020**
(21) Application number: 14161109.5
(22) Date of filing: 05.09.2011
(51) Int. Cl.: G02B 6/036, C03B 37/014, G02B 6/028

(54) **Optical fiber, optical fiber preform and method of fabricating same**
Glasfaser, Glasfaservorform und Herstellungsverfahren dafür
Fibre optique, préforme de fibre optique et son procédé de fabrication

(30) Priority: 06.09.2010 JP 2010198673; 01.09.2011 JP 2011191018
(43) Date of publication of application: 16.07.2014
(62) Divisional of application: 11180048.8
(73) Proprietor: Shin-Etsu Chemical Co., Ltd., Chiyoda-ku, Tokyo 100-0004 (JP)
(72) Inventor: OYAMADA, Hiroshi, Annaka-shi, Gunma 379-0195 (JP); OTOSAKA, Tetsuya, Annaka-shi, Gunma 379-0195 (JP)
(74) Representative: Kramer Barske Schmidtchen Patentanwälte PartG mbB

(56) References cited:
- EP-A1- 2 420 875
- WO-A2-2008/027351
- CN-A- 101 634 728
- GB-A- 2 307 908
- JP-A- 9 221 335
- JP-A- 2004 175 614

## Description

### BACKGROUND OF THE INVENTION

### Field of the Invention

The present invention relates to an optical fiber preform used for fabricating a single mode optical fiber with a trench type index profile.

### Description of the Related Art

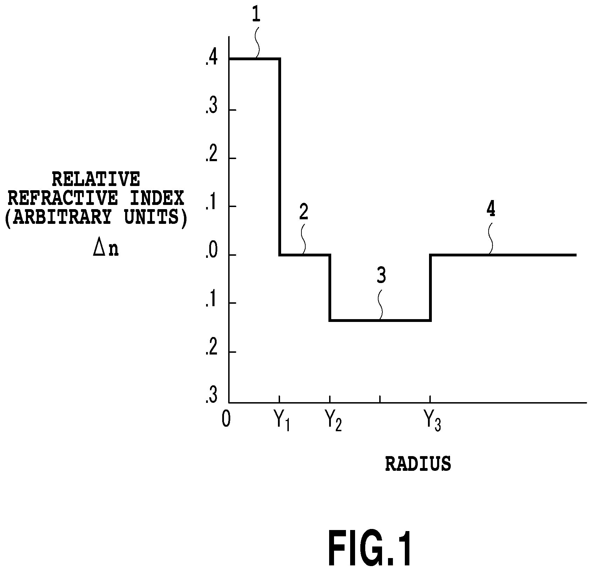

U.S. pat No. 4,852,968 discloses a single mode fiber in which the susceptibility to bending is reduced so that the bending tolerance is improved. As shown in Fig.1, the optical fiber has a core region 1, an inner cladding region 2 surrounding the core 1, a trench region 3 surrounding the inner cladding region 2, and an outer cladding region4 surrounding trench region. The refractive index profile of the optical fiber has a trench type index profile where the refractive index in the trench region arranged between the inner cladding region and the outer cladding region is lower than the refractive indexes in the inner cladding region and the outer cladding region, as shown in Fig. 1.

Typically, germanium is doped into the core so as to increase the refractive index thereof, and fluorine is doped into the trench region to decrease refractive index thereof, when all parts of an optical fiber are made of silica-based glass. The refractive index profile of the preform is nondestructively measured by an analyzer such as P104 preform analyzer produced by Photon Kinetics Co., Ltd. The measurement principle is disclosed in P.L.Chu, Electronics Letters, vol.13, no.24, pp.736-738 (1977). The measurement includes scanning a preform with a laser beam, determining a distribution profile of the angle of refraction responding to the refractive index distribution inside of the preform, and calculating the refractive index profile based on the profile of the angle of refraction.

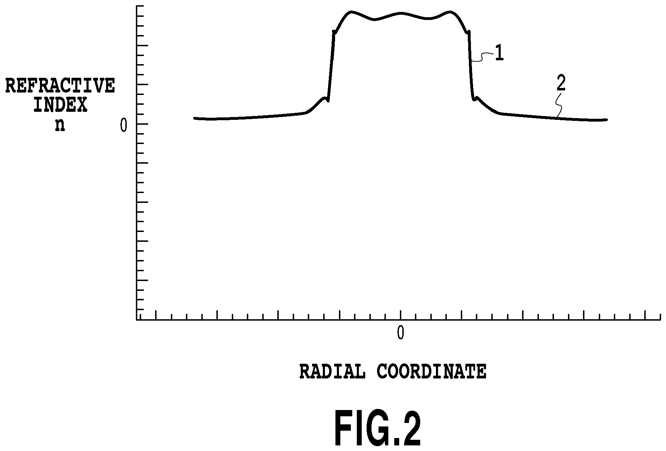

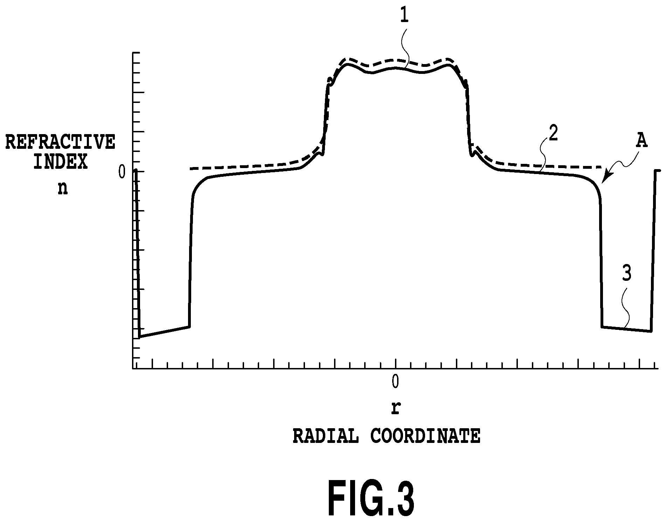

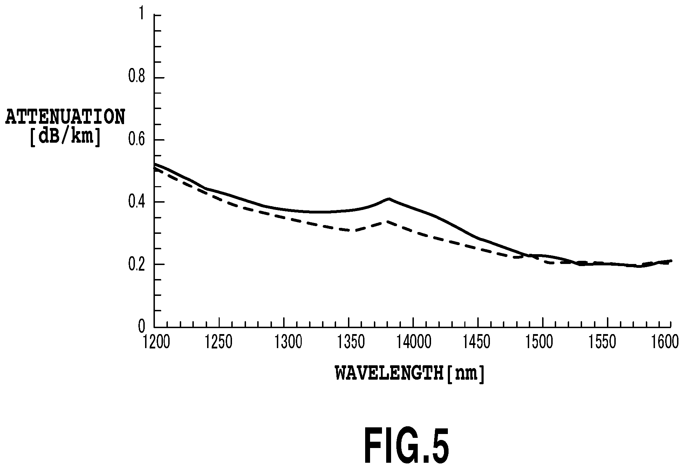

The above synthetic method of the preform of the optical fiber includes synthesizing a core member, which has a refractive index profile as shown in Fig.2 and is comprised of the core region 1 and the inner cladding region 2 integrated to each other, by a Vapor-Phase Axial Deposition (VAD) method, depositing the trench region 3 by an Outside Vapor Phase Oxidation (OVPO) method, and depositing the outer cladding region by the OVPO method. Alternatively, a method which includes preparing the core member, a glass tube with a glass composition of the trench region 3 and a glass tube for forming the outer cladding region 4, inserting the core member into the tubes, and heating them so as to be integrated. As above mentioned, the preform of which the core member, the trench region and the outer cladding region are formed by separate processes, respectively, actually has a refractive index profile as shown by Fig. 3, by a dashed line. The refractive index profile of the measured preform, however, has a smoothly curved portion in the vicinity of a boundary face between the inner cladding region and the trench region, as shown by a continuous line in Fig.3, so that a refractive index profile of this portion can not be precisely measured. That is, a dead zone where a refractive index profile can not be precisely obtained is created at the boundary region between the inner cladding region and the trench region, so that an actual refractive index profile of the core member, which is comprised of the core region and the inner cladding region integrated to each other, is different from a measured refractive index profile of the core member after depositing the trench region onto the core member. In addition, a spectrum of an optical fiber fabricated by drawing a preform, of which a core member and a trench region are formed in separate processes, has an increased transmission loss around a wave length of 1530nm after exposing the optical fiber to be exposed to hydrogen for about one day. Additionally, a spectrum of another optical fiber, which is fabricated by the same method, has an increased transmission loss around a wave length of 1400nm after exposing the optical fiber to be exposed to deuterium for about one day. A curved line shown by a dashed line in Fig.5 is a spectrum before exposure to deuterium. Such increased transmission losses of the optical fibers may not be restored to original transmission losses until several days to several weeks pass.

WO 2008/027351 A2 discloses an optical waveguide fiber that is bend resistant and single mode at 1260 nm and at higher wavelengths, wherein the optical fiber includes a core of radius R₁ and a cladding, the cladding having an annular inner region of radius R₂, an annular ring region and an annular outer region, wherein the annular ring region starts at R₂, and the ratio R₁/R₂ is greater than 0.40.

### SUMMARY OF THE INVENTION

The present invention provides an optical fiber preform according to claim 1 capable of obtaining a precise measurement of a refractive index profile.

According to the present invention, the refractive index varying region is formed at a boundary region between the inner cladding region surrounding the core region and the trench region, and has a refractive index gradually increasing from the trench region toward the inner cladding region. So, a direction of refraction of an incident laser beam for measurement which crosses the refractive index varying region is not drastically changed. Accordingly, a measurement accuracy of the refractive index of the optical fiber perform can be improved, and a difference between the actual refractive index of the core member and the measured refractive index of the core member after depositing the trench region thereon can be reduced.

In addition, it turned out that the refractive index varying region can suppress an increase of transmission loss created when an optical fiber fabricated from the above optical perform is exposed to hydrogen or deuterium.

Further features of the present invention will become apparent from the following description of exemplary embodiments (with reference to the attached drawings).

### BRIEF DESCRIPTION OF THE DRAWINGS

Fig. 1 is a graph illustrating an example of a refractive index profile of an optical fiber having trench region;
Fig. 2 is a graph illustrating a refractive index profile of a core member of which a core region and an inner cladding region are integrated to each other;
Fig. 3 is a graph illustrating a measured refractive index profile of a perform having a trench region;

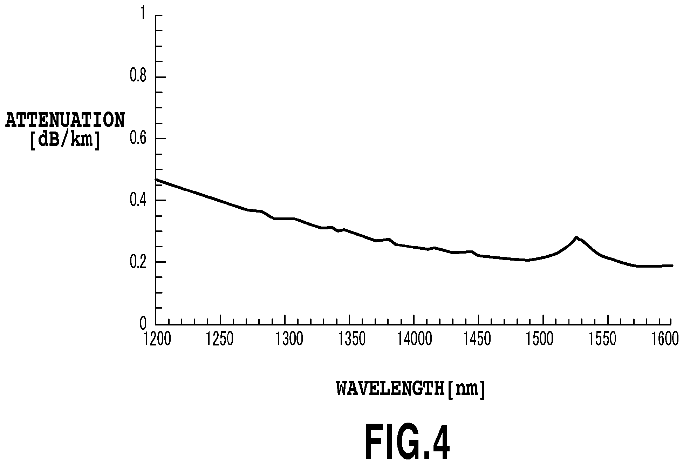

Fig. 4 is a graph illustrating a transmission loss of an optical fiber measured after exposure to hydrogen;
Fig. 5 is a graph illustrating a transmission loss of an optical fiber measured after exposure to deuterium;
Fig. 6A is a view showing a layer structure of an optical fiber preform according to an embodiment of the present invention;
Fig. 6B is a view showing a dead zone of refractive index created at a boundary region between a trench region and an inner cladding region when measuring an optical perform with a preform analyzer;
Fig. 7A is a graph illustrating a refractive index profile of the optical fiber preform according to the embodiment of the present invention;
Fig. 7B is an enlarged graph of the refractive index varying region in Fig.7A;
Fig. 8 is a graph illustrating a refractive index profile of a core member fabricated in Example 1;
Fig. 9A is a graph illustrating a measured refractive index profile of the core member fabricated in Example 1;
Fig. 9B is an enlarged graph illustrating the trench region in Fig. 9A;
Fig. 10 is a graph illustrating a transmission loss of an optical fiber which is exposed to a hydrogen atmosphere having a partial pressure of 0.03;
Fig. 11 is a graph illustrating a transmission loss of an optical fiber which is exposed to a deuterium atmosphere having a partial pressure of approximately 0.03 atmospheres of deuterium at a temperature of about 40 degrees Celsius; and
Fig. 12 is an enlarged view showing a refractive index profile of a trench region in a preform fabricated in Example 2.

### DESCRIPTION OF THE EMBODIMENTS

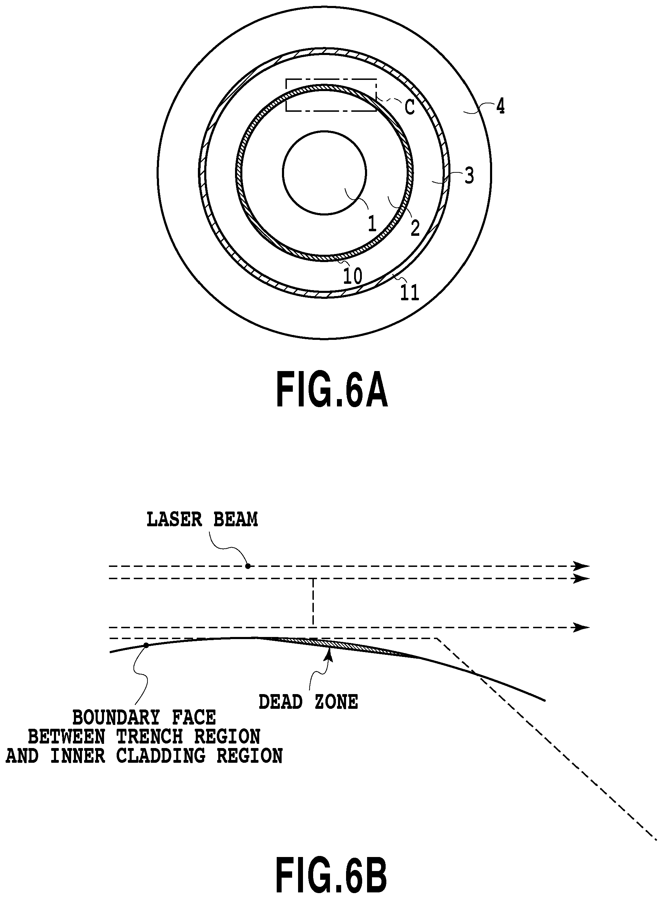

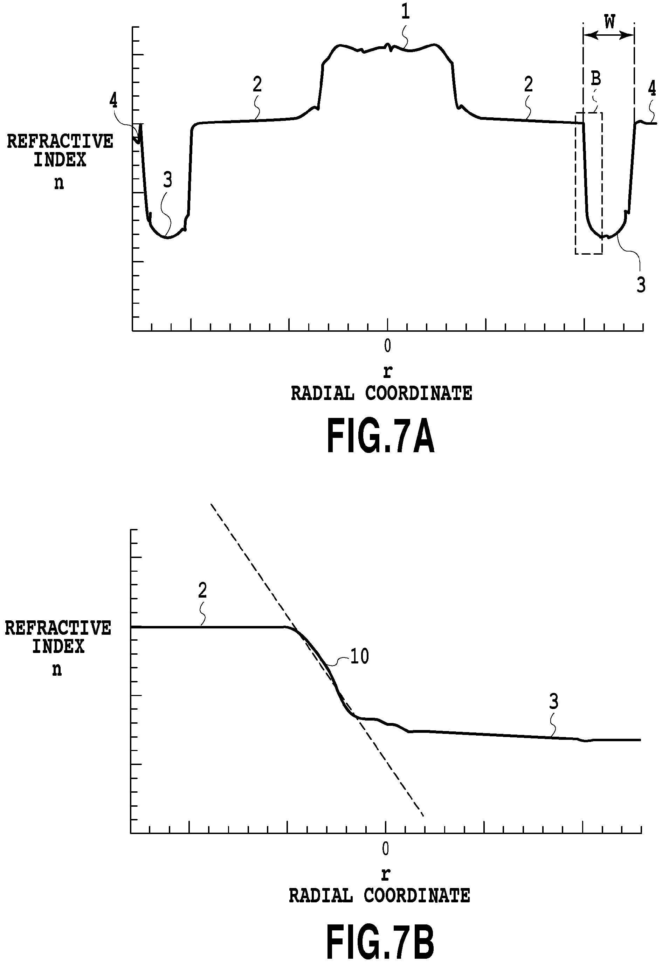

An embodiment of the present invention will be described below with reference to the attached drawings. Fig. 6A is a view showing a layer structure of an optical fiber preform according to an embodiment of the present invention. Fig. 7A is a graph illustrating a refractive index profile of an optical fiber preform according the present embodiment. Fig. 7B is an enlarged view of an area surrounded by a dashed line in Fig. 7A. As shown in Fig. 6A, the optical fiber preform of the present embodiment has a core region 1, an inner cladding region 2 surrounding the core region 1, a trench region 3 surrounding the inner cladding region 2 and an outer cladding region 4 surrounding the trench region 3. The core region 1 has a maximum refractive index n1, the inner cladding region 2 has a minimum refractive index n2, the trench region 3 has a minimum refractive index n3, and the outer cladding region 4 has a minimum refractive index n4. The indices are related so that n1>n2, n2>n3, n3<n4, and n2 is substantially equal to n4 between the refractive index n1 to n4.

The optical fiber preform of the present embodiment has a first refractive index varying region Z 10 of which a refractive index gradually increases from the trench region toward the inner cladding region, which is arranged at a boundary region between the inner cladding region 2 and the trench region 3. The refractive index profile of the first refractive index varying region 10 continuously varies from the trench region 3 toward the inner cladding region 2. The optical fiber preform according to the present embodiment also has a second refractive index varying region 11 of which a refractive index gradually increases from trench region 3 toward the outer cladding region 4, which is arranged at boundary region between the trench region 3 and the outer cladding region 4. The refractive index profile of the second refractive index varying region 11 continuously varies from the trench region 3 toward the outter cladding region 4.

Next, a method of fabricating the optical fiber preform according to the present embodiment will be described. First, a porous core member having the core region 1 and the inner cladding region 2 is synthesized by VAD method, which has a refractive index profile as shown in Fig. 2. The entire core member is formed of an aggregation of glass particles. Germanium is doped into the core region. The porous core member is heat-treated in a chlorine gas atmosphere of 1200 degree Celsius so as to eliminate OH radical causing a transmission loss having a peak at 1383nm. Next, the porous core member is heat-treated in a helium gas atmosphere of 1500 degree Celsius so as to make it transparent.

Next, the trench region 3 is formed on the core member, for example, by an OVPO (outside vapor phase oxidation) method. When forming the trench region 3, the first refractive index varying region 10 and the second refractive index varying region 11 are also formed. The first refractive index varying region 10 and the second refractive index varying region are formed in the trench region 3. A specific method of fabricating the first refractive index varying region 10 and the second refractive index varying region 11 will be discussed later. The outer cladding region 4 is deposited after forming the trench region 3 by the OVPO method.

In an optical fiber preform fabricated in such a way, glass composites are drastically changed at a boundary region between the inner cladding region and the trench region, and at a boundary region between the outer cladding region and the trench region, so refractive indexes at the boundary regions vary in a step-like form. Specifically, the drastic variation of the refractive index at the boundary region in the inner cladding region and the trench region drastically changes a refracted direction of a laser beam from a preform analyzer when the laser beam crosses around the boundary region so that a dead zone is created in a portion shown in Fig. 6B. Refractive index profile information can not be precisely obtained at the dead zone, so that the refractive index profile of the inner cladding region has a smoothly curved portion in the vicinity of the boundary region A as shown in Fig. 3.

In the present embodiment, the first refractive index varying region 10 arranged at the boundary region between the inner cladding region and the trench region does not drastically change a refracted direction of the laser light from the preform analyzer when the laser light crosses around the boundary region, so that the dead zone is not created. Accordingly, a measurement accuracy of the refractive index profiles of the core region and the inner cladding region can be improved. Also, it turned out that the first refractive index varying region 10 can reduce an increase of transmission loss of an optical fiber fabricated from the optical fiber preform when exposing the optical fiber to hydrogen or deuterium. In addition, the second first refractive index varying region 11 also appears to be able to reduce an increase of transmission loss of an optical fiber fabricated from the optical fiber preform when exposing the optical fiber to hydrogen or deuterium.

In the present invention, widths of the first refractive index varying region 10 are set to 2% to 50% of a width W of the trench region 3 in a radial direction, preferably, 5% to 15% of the width W of the trench region 3. The refractive index varying regions 10, 11 are formed by stacking glass layers of which a dope amount of fluorine is changed step by step, as discussed later. A width of less than 2% of the width W requires an extremely thin thickness of each of the stacked glass layers, which results in significantly decreased fabricating efficiency. Conversely, an increase of the thickness of each of the glass layers to be stacked results in a significant change of the doping amount of fluorine so that it becomes difficult to form the refractive index varying regions 10, 11. A width of more than 50% of the width W decreases a confinement efficiency of a fundamental mode light transmitting in the optical fiber to the core region so that bending loss increases. In addition, the width W of the trench region is defined by a width between an initial position where a refractive index begins to be lower than the minimum refractive index n2 of the inner cladding region 2 in a direction from the inner cladding region 2 toward the trench region 3 and an initial position where a refractive index begins to be lower than the minimum refractive index n4 of the outer cladding region 4 in a direction from the outer cladding region 4 toward the trench region 3.

### [Example]

### Example 1

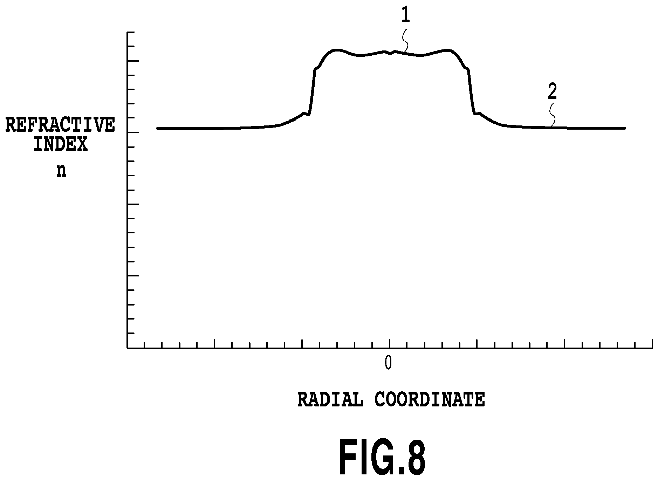

A core member was fabricated by the above method. Fig. 8A shows a refractive index profile of the core member. In the core member, a relative refractive index difference Δ1 of the core region is 0.38%, and a relative refractive index difference Δ2 of the inner cladding region is substantially zero. In addition, the core member was heat-treated in a chlorinated gas atmosphere, so that about 0.1% to 0.2% of residual chloride as unintentional impurities remained in the core member.

Next, a trench region was deposited on the outer surface of the core member by the OVPO method. The trench region was formed by stacking about two hundred fluorine-contained silica-glass layers. Each of the fluorine-contained silica-glass layers has a thickness of about 0.02 mm and is formed by depositing 0.02 mm thick fluorine-contained silica-glass particles on the core member while rotating the core member about a center axis of the core region. The fluorine-contained silica-glass particles were synthesized by supplying a silicon tetrachloride (SiCl₄) gas and a sulfur hexafluoride (SF₆) gas to an argon-oxygen (Ar/O₂) plasma flame. An initial twenty layers of the fluorine-contained silica-glass layers were deposited while a flow rate of the sulfur hexafluoride (SF₆) gas was increased by a predetermined amount, layer by layer, while keeping a feed rate of the silicon tetrachloride constant. Thereby a refractive index profile of the initial twenty layers is continuously and gradually varied. The initial twenty layers constitute a first refractive index region 10. In addition, the last twenty layers of the fluorine-contained silica-glass layers were deposited while a flow rate of the SF₆ was decreased by a predetermined amount layer by layer. Thereby, a refractive index profile of the last twenty layers is continuously and gradually varied. The last twenty layers constitute a second refractive index region 11. After forming the trench region in this way, an outer cladding region was formed on the outer surface of the trench region by depositing glass particles using the OVPO method. The glass particles were synthesized by supplying a silicon tetrachloride (SiCl₄) gas to an oxyhydrogen gas flame. Finally, the preform was heat-treated in a chloride gas atmosphere so as to make it transparent.

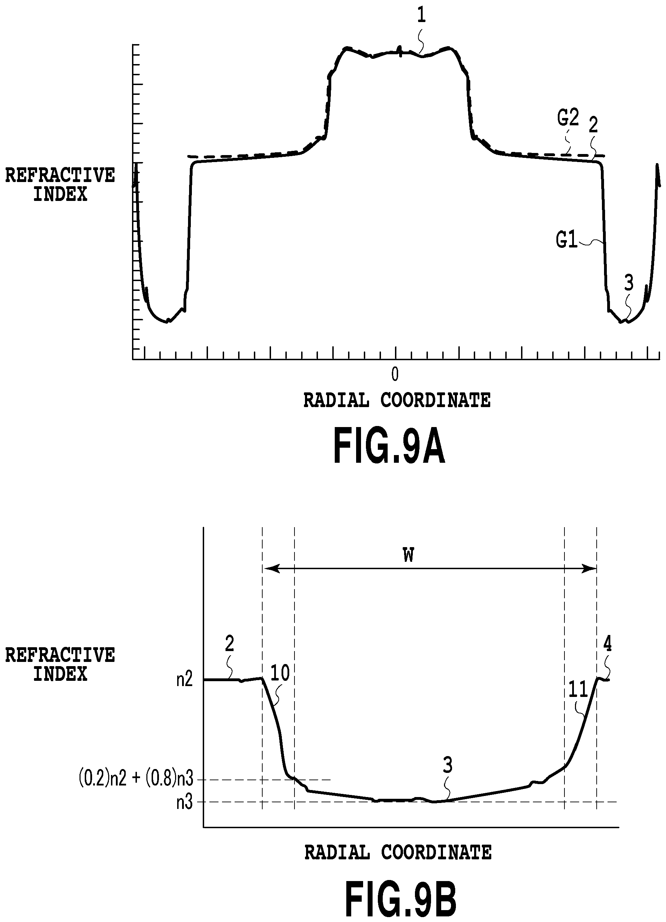

A refractive index profile shown in Fig. 9A was obtained by measuring the preform fabricated by the above process using a preform analyzer. Fig. 9B is an enlarged graph of the trench region in Fig. 9A. Between the inner cladding region and the trench region, a first refractive index varying region 10 having a refractive index profile which continuously and gradually varies and a width equivalent to 9.6% of the width W of the trench region is formed. Also, between the trench region 3 and the outer cladding region 4, a second refractive index varying region 11 having a refractive index profile which continuously and gradually varies and a width equivalent to 14.6% of the width of the trench region. It can be seen that a portion corresponding to the core member of the measured refractive index profile G1 in Fig. 9A is similar to the refractive index profile G2 of Fig. 8, which is shown by a dashed line in Fig. 9A.

An optical fiber was made by drawing the fabricated preform. Optical characteristics of the optical fiber are as described below.
Cut off wave length (22m) =1254nm
Mode field diameter=8.82µm
Zero-dispersion wavelength=1309nm
Bending loss=0.06dB (per one turn when the optical fiber is wound around a column having a diameter of 10mm and at a wave length of 1550nm)

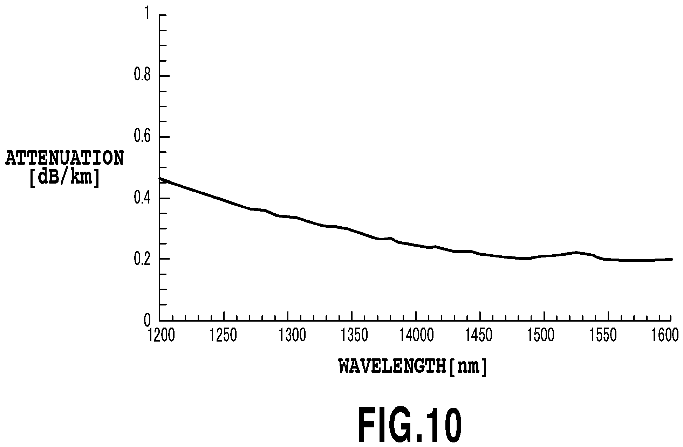

A 1.5km length of an optical fiber extracted from the above optical fiber was exposed to a hydrogen atmosphere having a partial pressure of approximately 0.03 atmospheres of hydrogen at a temperature of about 40 degrees Celsius for approximately one day. Fig. 10 shows a measured transmission loss after the exposure, which has an increase of the transmission loss at around a wave length of 1530nm and the extent of the increase was approximately 0.31dB/km after the hydrogen treatment. Approximately three days after the hydrogen treatment, the increase of the transmission loss shrank, and the transmission loss of the optical fiber was restored to the same level as before the hydrogen treatment.

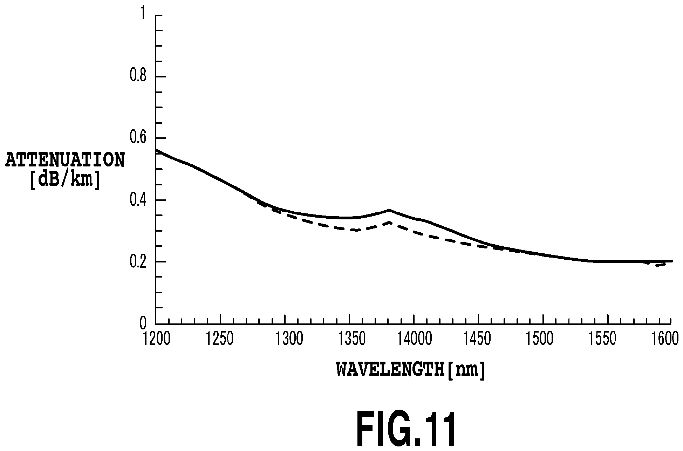

In addition, a 1.5km length of the other optical fiber extracted from the above optical fiber was exposed to a deuterium atmosphere having a partial pressure of approximately 0.03 atmospheres of deuterium at a temperature of about 40 degrees Celsius for approximately one day. Transmission losses of the optical fiber before and after the deuterium treatment were compared, as shown in Fig. 11. There was an increase of the transmission loss at around a wave length of 1400nm and the extent of the increase was approximately 0.05dB/km. The curved line shown by a dashed line shows a transmission loss of the optical fiber before the exposure to deuterium.

The optical fiber was in an atmosphere for approximately three weeks after the deuterium treatment, and the increase of the transmission loss shrank, and a transmission loss of the optical fiber was restored to the same level as before the deuterium treatment.

### Example 2

A core member was fabricated by the same method as Example 1. The core member has a refractive index profile shown in Fig. 8 and the same characteristics as the optical fiber of Example 1.

Next, a porous layer for a trench region was deposited on the outer surface of the core member by the OVPO method. The trench region was formed by stacking about two hundred porous glass layers which is formed of silica-glass. Each of the porous glass layers has a thickness of about 0.04 mm and is formed by depositing 0.04 mm thick silica-glass particles on the core member while rotating the core member about a center axis of the core region. The silica-glass particles were synthesized by supplying a silicon tetrachloride (SiCl₄) gas to an oxyhdrogen gas flame. An initial forty layers of the porous glass layers were deposited while a flow rate of hydrogen gas supplied to the oxyhydrogen gas was increased by a predetermined amount layer by layer. Thereby, a density of the initial forty layers continuously varied and gradually increased toward the inner cladding region. The initial forty layers constitute a first refractive index varying region 10. Note that a second refractive index varying region 1 was not formed in Example 2. Next, a trench layer containing fluorine was formed by heat-treating a porous body comprised of the porous glass layers with a silicon tetrafluoride (SiF₄) gas to make it transparent. Next, an outer cladding region was formed on the outer surface of the trench region by depositing glass particles using the OVPO method. The glass particles were synthesized by supplying a silicon tetrachloride (SiCl₄) gas to an oxyhydrogen gas flame. Finally, the preform was heat-treated in a chloride gas atmosphere to make it transparent.

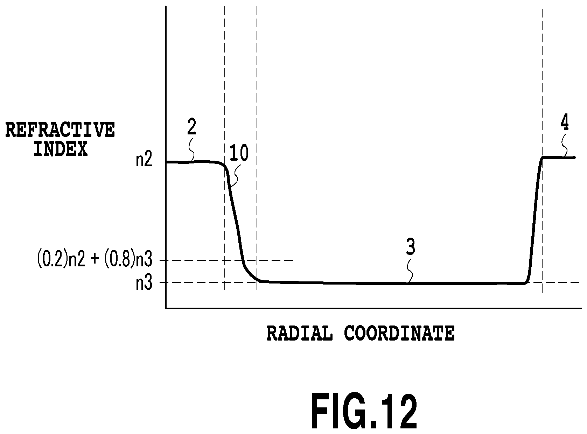

A refractive index profile of the preform fabricated by the above process was measured by a preform analyzer. The refractive index profile was similar to that of the preform of Example 1. Fig. 12 shows an enlarged refractive index profile of the trench region. Between the inner cladding region and the trench region, the refractive index profile continuously and gradually varies and a refractive index varying region having a width equivalent to 6.4% of the width W of the trench region is formed. The refractive index profile of the core member is similar to that of Fig. 8.

An optical fiber was made by drawing the fabricated preform. Optical characteristics of the optical fiber are as described below.
Cut off wave length (22m) =1214nm
Mode field diameter=9.08µm
Zero-dispersion wave length=1317nm
Bending loss=0.08dB(when winding the optical fiber around a column having a diameter of 10mm one time and at a wave length of 1550nm)

A 1.5km length of an optical fiber extracted from the above optical fiber was exposed to a hydrogen atmosphere having a partial pressure of approximately 0.03 atmospheres of hydrogen at a temperature of about 40 degrees Celsius for approximately one day. There was little increase of a transmission loss at around a wave length of 1530nm and a transmission loss at a wave length of 1530nm was approximately 0.21dB/km both of before and after the hydrogen treatment.

In addition, a 1.5km length of the other optical fiber extracted from the above optical fiber was exposed to a deuterium atmosphere having a partial pressure of approximately 0.03 atmospheres of deuterium at a temperature of about 40 degrees Celsius for approximately one day. There was little increase of a transmission loss at around a wave length of 1400nm.

### Comparative Example 1

A core member was fabricated by the same method as Example 1. The core member has a refractive index profile shown in Fig. 8 and the same characteristics as the optical fiber of Example 1.

Next, a trench region was deposited on the outer surface of the core member by the OVPO method. The trench region was formed by stacking about two hundred fluorine-contained silica-glass layers. Each of the fluorine-contained silica-glass layers has a thickness of about 0.02 mm and is formed by depositing 0.02 mm thick fluorine-contained silica-glass particles in thickness on the core member while rotating the core member about a center axis of the core region. The fluorine-contained silica-glass particles were synthesized by supplying a silicon tetrachloride (SiCl₄) gas and a sulfur hexafluoride (SF₆) gas to an argon-oxygen (Ar/O₂) plasma flame. A flow ratio of the sulfur hexafluoride (SF₆) gas was constant during stacking of the fluorine-contained silica-glass layers, so that a refractive index at a boundary between the inner cladding region and the trench region drastically varied. After forming the trench region, an outer cladding region was deposited on the outer surface of the trench region by the OVPO method. Finally, the preform was heat-treated to make it transparent.

A refractive index profile of the preform fabricated by the above process was measured by a preform analyzer. The refractive index profile is shown in Fig. 3. A portion corresponding to the core member in the refractive index profile is similar to a refractive index of the core member of Fig. 8 in shape, which is illustrated by a dashed line in Fig. 3. However, it can be seen that the refractive index profile of the inner cladding region is smoothly curved at a boundary region between the inner cladding region 2 and the trench region 3, and a level of the core region 1 at a center portion becomes lowered.

An optical fiber was made by drawing the preform. Optical characteristics of the optical fiber are as described below.
Cut off wave length (22m) =1250nm
Mode field diameter=8.88µm
Zero-dispersion wave length=1308nm
Bending loss=0.05dB (when winding the optical fiber around a column having a diameter of 10mm one time and at a wave length of 1550nm)

A 1.5km length of an optical fiber extracted from the above optical fiber was exposed to a hydrogen atmosphere having a partial pressure of approximately 0.03 atmospheres of hydrogen at a temperature of about 40 degrees Celsius for approximately one day. There was an increase of a transmission loss at around a wave length of 1530nm and a transmission loss at a wave length of 1530nm was approximately 0.52dB/km after the hydrogen treatment.

In addition, a 1.5km length of the other optical fiber extracted from the above optical fiber was exposed to

In the above embodiment, a sulfur hexafluoride (SF₆) gas was disclosed as an example of a fluorine-containing gas. However, a silicon tetrafluoride (SiF₄) or a methane tetrafluoride (CF₄) can be employed. A refractive index also can be varied by supplying a material gas and a fluorine containing gas to an oxyhydrogen flame.

In the above embodiment, the refractive index varying region between the inner cladding region and the trench region is formed by gradually increasing a feed rate of the fluorine-containing gas while keeping a feed rate of the glass raw material constant. The present invention is not limited to this. The refractive index varying region can be formed by gradually increasing a relative feed rate of the fluorine-containing gas with respect to the glass raw material. Accordingly, the refractive index varying

region also can be formed by gradually decreasing a feed rate of the glass raw material while keeping a feed rate of the fluorine-containing gas constant.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An optical fiber preform, comprising:
a core region (1);
an inner cladding region (2) surrounding the core region (1) ;
a trench region (3) surrounding the inner cladding region;
an outer cladding region (4) surrounding the trench region; and
a refractive index varying region (10) arranged between the inner cladding region (2) and the trench region (3), and having a refractive index increasing from the trench region (3) to the inner cladding region (2),
wherein the refractive index varying region (10) is composed of a plurality of stacked glass layers having an amount of fluorine-dope decreasing in steps from layer to layer,
wherein fluorine is doped into the trench region (3), an amount of fluorine-dope in the refractive index varying region (10) decreases from the trench region (3) to the inner cladding region (2).

## Patentansprüche

1. Lichtleitfaservorformling mit:
einer Kernregion (1);
einer Innenummantelungsregion (2), die die Kernregion (1) umgibt;
einer Grabenregion (3), die die Innenummantelungsregion umgibt;
einer Außenummantelungsregion (4), die die Grabenregion umgibt; und
einer Brechungsindexvariationsregion (10), die zwischen der Innenummantelungsregion (2) und der Grabenregion (3) angeordnet ist und einen Brechungsindex aufweist, der von der Grabenregion (3) zu der Innenummantelungsregion (2) zunimmt,
bei dem die Brechungsindexvariationsregion (10) aus mehreren gestapelten Glasschichten mit einer Menge einer Fluordotierung, die von Schicht zu Schicht schrittweise abnimmt, besteht,
bei dem die Grabenregion (3) mit Fluor dotiert ist, wobei eine Menge einer Fluordotierung in der Brechungsindexvariationsregion (10) von der Grabenregion (3) zu der Innenummantelungsregion (2) abnimmt.

## Revendications

1. Préforme de fibre optique, comprenant :
une région d'âme (1) ;
une région de gainage interne (2) entourant la région d'âme (1) ;
une région de tranchée (3) entourant la région de gainage interne ;
une région de gainage externe (4) entourant la région de tranchée ; et
une région de variation d'indice de réfraction (10) agencée entre la région de gainage interne (2) et la région de tranchée (3), et ayant un indice de réfraction croissant de la région de tranchée (3) à la région de gainage interne (2),
dans laquelle la région de variation d'indice de réfraction (10) est composée d'une pluralité de couches de verre empilées ayant une quantité de dopant au fluor décroissante par étapes d'une couche à une autre,
dans laquelle du fluor est dopé dans la région de tranchée (3), une quantité de dopant au fluor dans la région de variation d'indice de réfraction (10) décroît de la région de tranchée (3) à la région de gainage interne (2).
